# FASCICULE DE BREVET EUROPEEN

(11) **EP 2 130 994 B1**
(45) Date de publication et mention de la délivrance du brevet: **29.10.2014**
(21) Numéro de dépôt: 09290407.7
(22) Date de dépôt: 02.06.2009
(51) Int. Cl.: E04H 15/32, F16B 7/18, F16B 35/04

(54) **Dispositif d'écartement de deux demi-arceaux de soutien et de mise sous tension d'une toile d'un abri léger**
Vorrichtung zum Spreizen von halbbögigen Trägern und zum Spannen eines Gewebes einer leichten Unterkunft
Device for spreading two supporting semi-arches and for applying tension to a canvas of a light shelter

(30) Priorité: 02.06.2008 FR 0803010
(43) Date de publication de la demande: 09.12.2009
(73) Titulaire: Dalo Frères, 78120 Rambouillet (FR)
(72) Inventeur: Dalo, Pietro, 28320 Gallardon (FR)
(74) Mandataire: Oudin, Stéphane

(56) Documents cités:
- DE-C1- 3 641 290
- DE-C1- 3 911 300
- FR-A- 1 580 325
- FR-A- 2 681 625
- FR-A- 2 732 394

## Description

La présente invention est du domaine des dispositifs de mise en tension d'une toile constitutive d'un toit d'un abri léger. Elle a pour objet un dispositif d'écartement de deux demi-arceaux formant conjointement support d'une telle toile, en vue de sa mise sous tension.

On connaît des abris légers comprenant un cadre rigide qui est porté par un piètement et qui supporte un toit. Ce dernier comprend une toile qui est soutenue par une ossature comprenant au moins un arceau dont les extrémités inférieures prennent appui sur le cadre rigide. L'arceau est subdivisé en deux demi-arceaux dont les extrémités inférieures prennent chacune appui sur le cadre rigide, et dont les extrémités supérieures sont reliées l'une à l'autre.

Un problème général posé dans le domaine réside dans une mise sous tension contrôlée et pérenne de la toile, tant pour des raisons esthétiques que pour des raisons de sécurisation et de maintien de l'abri léger. Il a été proposé un mécanisme de mise sous tension de la toile, à partir d'un dispositif d'écartement l'une de l'autre des extrémités supérieures des demi-arceaux, tandis que leurs extrémités inférieures prennent des appuis antagonistes sur le cadre rigide.

Par exemple selon FR 2 732 394 (DALO PIETRO) les extrémités supérieures des demi-arceaux sont reliées l'une à l'autre par emboîtement. Pour réaliser cet emboîtement, l'extrémité supérieure d'un demi-arceau est agencée en tube destiné à être introduit à l'intérieur de l'extrémité supérieure de l'autre demi-arceau agencée en manchon de réception du tube.

Le dispositif d'écartement comprend une noix soudée à l'extrémité supérieure d'un demi-arceau, cette noix étant munie d'un trou fileté à l'intérieur duquel est destinée à être engagée une vis. Une pièce métallique conformée en U est soudée à l'extrémité supérieure de l'autre demi-arceau par l'intermédiaire de l'une de ses jambes, tandis que l'autre jambe est munie d'un orifice fileté destiné à recevoir la vis. La partie intermédiaire de la pièce métallique surplombe la noix, cette dernière étant placée en interposition entre les jambes. L'engagement de la vis suivant un axe parallèle à celui d'extension générale des extrémités supérieures des arceaux, conjointement à l'intérieur du trou et de l'orifice filetés, tend à rapprocher l'une de l'autre la noix et la jambe correspondante de la pièce métallique. Un tel rapprochement induit un coulissement du tube à l'intérieur du manchon, ce qui permet de provoquer un écartement des extrémités supérieures des demi-arceaux l'une de l'autre et en conséquence d'obtenir la mise sous tension de la toile.

Le document FR 2 732 394 décrit un dispositif ayant les caractéristiques du préambule de la revendication 1.

Un inconvénient d'un tel dispositif réside dans le fait que la pièce métallique, et plus particulièrement sa partie intermédiaire, est soumise à des efforts qui tendent à la déformer par flambage. Une telle déformation porte atteinte à la fiabilité et à la pérennité du dispositif, voire est susceptible de le détériorer par rupture mécanique de la pièce métallique dans sa partie intermédiaire notamment. Un autre inconvénient d'un tel dispositif réside dans le fait que les pièces qui le constituent sont d'un agencement spécifique et coûteux à obtenir, avec pour conséquence une atteinte à sa compétitivité. En outre, la complexité de l'agencement du dispositif qui résulte de la spécificité des nombreuses pièces qui le composent, rend son utilisation peu commode à l'encontre du résultat principalement recherché de permettre une mise sous tension rapide et aisée de la toile.

Il a aussi été proposé par FR 2 681 625 (DALO PIETRO) un mécanisme d'écartement selon lequel les extrémités supérieures des demi-arceaux sont reliées l'une à l'autre par l'intermédiaire d'une tige filetée. Cette dernière est en prise à chacune de ses extrémités avec des écrous respectivement solidaires de l'une et l'autre des extrémités des demi-arceaux. Plus particulièrement, les écrous sont logés dans des embouts respectivement rapportés à l'intérieur de l'une et l'autre des extrémités des demi-arceaux, de manière à interdire une rotation des écrous sur eux-mêmes sous l'effet d'une rotation de la tige filetée. Un organe de manoeuvre en rotation de la tige filetée est agencé en écrou et est solidaire de la tige filetée dans sa zone médiane. De part et d'autre de cet organe de manoeuvre, la tige filetée présente des filetages à sens de rotation inverses qui coopèrent avec les écrous correspondant équipant les extrémités des demi-arceaux. Ces dispositions sont telles qu'une manoeuvre en rotation de la tige filetée induit un éloignement l'une de l'autre des extrémités supérieures des demi-arceaux, avec pour effet d'obtenir la mise sous tension de la toile.

Un inconvénient d'un tel dispositif réside dans le fait que la liaison des demi-arceaux par l'intermédiaire de la tige filetée n'est pas satisfaisante, tant au regard de la fiabilité et de la pérennité du dispositif d'écartement, qu'au regard de l'aisance de sa mise en oeuvre par un opérateur. En outre, les conditions de manoeuvre de la tige filetée en rotation induisent un risque de blessure de la toile, ce qui est à éviter. Un autre inconvénient réside dans le fait que l'assemblage des pièces entre elles est complexe et donc coûteux, avec pour conséquence une atteinte à la compétitivité du dispositif. En outre, on comprend bien, qu'avec la tige et les écrous ainsi configurés, on a un point d'articulation dû notamment au jeu de fabrication entre les différents éléments lorsqu'on écarte les extrémités supérieures des demi-arceaux pour mettre en tension la toile. Ce point d'articulation a pour effet d'affaiblir ledit dispositif lorsqu'il est soumis aux efforts mécaniques résultant de l'écartement des extrémités supérieures et de le rendre instable notamment dans le temps.

Il en ressort à l'usage que de tels mécanismes de mise sous tension de la toile d'un abri léger, mettant en oeuvre un dispositif d'écartement des extrémités supérieures de deux demi-arceaux reliées l'une à l'autre, méritent d'être améliorés.

Le but de la présente invention est de proposer un dispositif d'écartement de deux demi-arceaux formant conjointement support d'une toile d'un abri léger et permettant une mise sous tension de cette dernière.

Il est plus particulièrement visé par la présente invention de proposer un tel dispositif qui surmonte les difficultés énoncées, et notamment qui soit d'une structure simple et peu coûteuse à obtenir, tout en étant fiable, pérenne et robuste à l'encontre des efforts que le dispositif est susceptible de supporter. En outre, il est recherché de proposer une structure d'un tel dispositif qui offre un accès facile aux organes le composant, notamment en vue d'un maniement aisé et rapide par un opérateur sans risque d'induire une détérioration de la toile.

Le dispositif de la présente invention est un dispositif d'écartement entre les extrémités supérieures de demi-arceaux constitutifs d'une ossature destinée à soutenir et à mettre sous tension une toile d'un abri léger. Ce dispositif comprend des moyens de liaison du type par emmanchement coulissant d'un tube à l'intérieur de l'une au moins des extrémités supérieures des demi-arceaux. Le dispositif comprend aussi des moyens d'écartement des dites extrémités des demi-arceaux, qui comprennent des organes de prise respectivement solidaires de l'une et l'autre des dites extrémités. Un organe fileté coopère avec lesdits organes de prise en vue du rapprochement et/ou inversement de l'éloignement des dites extrémités l'une de l'autre.

Selon la présente invention, un tel dispositif est principalement reconnaissable en ce que l'organe fileté est constitué d'une tige filetée munie dans sa zone médiane d'un organe de manoeuvre en rotation et à ses extrémités de filetages à sens inverses de rotation. Cette tige filetée coopère avec les organes de prise sans affecter la liaison par emboîtement des demi-arceaux entre eux, les organes de prise étant solidarisés à l'extérieur des extrémités des demi-arceaux et comportant des filetages intérieurs d'un sens de rotation inverse de l'un à l'autre des organes de prise. Ces filetages intérieurs sont respectivement coopérants avec les filetages correspondants de la tige filetée. Plus particulièrement, les moyens de liaison des demi-arceaux entre eux sont dissociés des moyens permettant l'écartement l'une de l'autre de leurs extrémités.

L'externalisation des organes de prise permet de ne pas affecter ni le libre agencement par emmanchement coulissant des demi-arceaux entre eux, dont la robustesse est dissociée des moyens mis en oeuvre pour l'écartement de leurs extrémités l'une de l'autre, ni le libre agencement des moyens d'écartement dont l'encombrement et la position relative des organes de prise l'un par rapport à l'autre peuvent être librement choisis selon les besoins. L'accès à l'organe de manoeuvre par un opérateur et sa maniabilité pour la mise en rotation de la tige filetée en sont facilités. Cette aisance d'accès et de maniabilité est notamment obtenue grâce à la position de l'organe de manoeuvre qui est radialement décalé vers l'extérieur des demi-arceaux par rapport à l'axe général d'extension de leur extrémité supérieure, et qui est placé entre les organes de prise dont l'éloignement axial l'un de l'autre peut être librement adapté pour ménager entre eux un passage d'accès radial à l'organe de manoeuvre. L'accès ainsi obtenu à l'organe de manoeuvre garantit aussi une mise en rotation de la tige filetée par un opérateur sans risque d'altérer ni de blesser la toile. La tige filetée constitue un organe d'une robustesse seulement adaptée à l'écartement des extrémités des demi-arceaux l'une de l'autre, cette robustesse étant dissociée de la liaison des demi-arceaux l'un à l'autre par emmanchement du tube.

Les organes de prise sont avantageusement agencés en cavalier, dont les pattes sont scellées à la périphérie des dites extrémités des demi-arceaux. Les pattes logent entre elles un corps muni du filetage intérieur correspondant. Les organes de prise sont d'une structure simple et leur montage sur les demi-arceaux est réalisable à moindres coûts, sans contrainte de précision dimensionnelle rigoureuse. L'agencement en cavalier des organes de prise permet non seulement de ménager aisément le filetage intérieur dont ils sont munis, mais aussi de conforter leur solidarisation aux demi-arceaux, notamment par soudage, par collage ou autre technique de solidarisation analogue. L'écartement des pattes du cavalier l'une de l'autre permet de conforter l'assise que prennent les organes de prise à la périphérie des demi-arceaux, sans avoir à complexifier outre mesure la structure du dispositif.

Pour simplifier l'agencement structurel des organes de prise, ledit corps comprend un écrou muni dudit filetage intérieur et solidarisé aux pattes du cavalier constitutif de l'organe de prise correspondant.

Plus particulièrement et selon une forme préférée de réalisation, le corps comprend des nervures latérales de renfort respectivement ménagées contre la face interne des pattes du cavalier constitutif de l'organe de prise correspondant, l'écrou étant solidarisé aux pattes par l'intermédiaire des nervures latérales de renfort contre lesquelles il est placé en appui axial.

Selon une autre forme de réalisation, des glissières sont ménagées le long des nervures de renfort latéral pour la réception respective de deux pans opposés de l'écrou, de sorte que ce dernier soit immobilisé en rotation à l'intérieur des nervures de renfort.

L'agencement structurel du corps est simple et son montage sur l'organe de prise auquel il est affecté est aisé, sans affecter la fiabilité et la pérennité du dispositif. Les nervures de renfort permettent de conforter la résistance des cavaliers à l'encontre des efforts auxquels ils sont destinés à être soumis, sans risque d'altération des modalités utilisées pour leur solidarisation aux demi-arceaux. De telles nervures de renfort sont de préférence intégrées aux pattes des cavaliers, de moulage ou en étant rapportées par scellement ou encore en étant formées par usinage. L'épaisseur des pattes du cavalier est susceptible d'être affaiblie à sa juste suffisance pour procurer une résistance satisfaisante, seule les zones des cavaliers supportant principalement les efforts étant renforcées par les nervures qui reçoivent les écrous coopérants avec la tige filetée.

Les corps sont de préférence ménagés aux extrémités distales des organes de prise, pour optimiser la course potentielle d'écartement des extrémités des demi-arceaux l'une de l'autre, pour une distance donnée de séparation des organes de prise l'un de l'autre. On comprendra par extrémité distale l'extrémité des cavaliers qui est la plus éloignée de l'organe de manoeuvre. L'organisation générale des moyens de mise en relation de la tige filetée avec les extrémités supérieures des demi-arceaux, par l'intermédiaire d'organes de prise agencés en cavalier et solidarisés à la périphérie des demi-arceaux, offre une liberté d'implantation des organes de prise simplifiant la structure du dispositif et permettant une obtention de ce dernier à moindres coûts.

De préférence, une platine de jonction des pattes du cavalier comporte des débordements latéraux de renfort. De tels débordements permettent de conforter la robustesse des organes de prise agencés en cavalier, sans accroître outre mesure leur masse globale ni leur encombrement, et sans affecter la liberté d'implantation et la simplicité de solidarisation des organes de prise sur les demi-arceaux.

On notera que chaque cavalier est indifféremment formé par moulage ou par usinage d'un tronçon issu d'un profilé ou encore par assemblage par scellement d'éléments le composant.

L'organe de manoeuvre est par exemple agencé en organe de section polygonale, écrou notamment, ou en tout autre organe agencé de manière à autoriser sa prise pour son entraînement en rotation sur lui-même. L'organe de manoeuvre est de préférence solidarisé sur la tige filetée, notamment par soudage ou technique analogue.

Les moyens de liaison comprennent ledit tube qui est préférentiellement constitué d'un élément indépendant emmanché en coulissement glissant à l'intérieur de l'une et/ou de l'autre des extrémités des demi-arceaux. Le tube constitue un contrefort de la tige filetée à l'encontre des efforts que supporte cette dernière lors de l'écartement l'une de l'autre des extrémités des demi-arceaux. Le dispositif d'écartement est préservé des contraintes résultant de sa mise en oeuvre, les efforts étant principalement supportés par le tube dont la robustesse est nettement supérieure à celle de la tige filetée.

Selon une forme de réalisation, le tube est solidaire de l'extrémité supérieure de l'un des demi-arceaux, et est emmanché en coulissement glissant à l'intérieur de l'extrémité supérieure de l'autre demi-arceau. Une telle solidarisation est susceptible d'être obtenue par scellement, ou encore par l'intermédiaire d'un organe de butée ou analogue. Selon une autre forme de réalisation, le tube est emmanché en coulissement glissant à l'intérieur de l'une et de l'autre des extrémités des demi-arceaux, leur extraction involontaire hors des demi-arceaux étant interdite par des organes de butée, accessoirement amovibles, qui sont respectivement affectés aux demi-arceaux, ou par brochage ou encore par tout autre technique analogue.

La présente invention sera mieux comprise, et des détails en relevant apparaîtront, à la lecture de la description qui va être faite d'une forme préférée quoique non limitative de réalisation de l'invention en relation avec les figures de la planche annexée, dans laquelle :
- la figure 1 est une représentation en perspective d'un abri léger comprenant un dispositif d'écartement selon la présente invention.
- les figures 2 et 3 sont des illustrations en perspective d'un dispositif d'écartement constitutif de l'abri représenté sur la figure 1, respectivement en vue éclatée et vue assemblée.
- les figures 4 et 5 sont des illustrations du dispositif d'écartement représenté sur les figures 2 et 3, respectivement en coupe transversale et en coupe longitudinale.

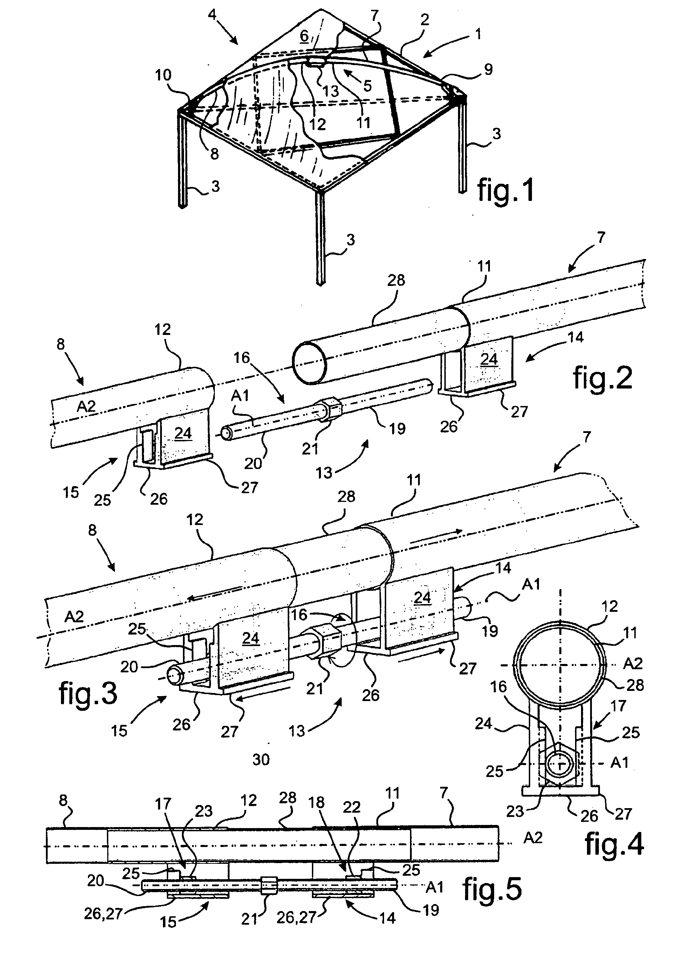

Sur la figure 1, un abri léger 1 comprend un cadre rigide 2 maintenu à distance du sol par un piètement 3. L'abri léger 1 est muni d'un toit 4 qui comprend une ossature 5 destinée à soutenir et à mettre sous tension une toile 6. L'ossature 5 est constituée d'au moins deux demi-arceaux 7 et 8. Les extrémités inférieures 9 et 10 des demi-arceaux 7, 8 sont destinées à prendre appui sur le cadre rigide 2, tandis que leurs extrémités supérieures 11 et 12 sont reliées l'une à l'autre par des moyens de liaison du type par emmanchement, et sont équipées d'un dispositif d'écartement 13 pour tendre la toile 6.

Sur les figures 2 à 5, le dispositif d'écartement 13 comprend des organes de prise 14 et 15 qui sont respectivement solidaires de l'une et l'autre des extrémités supérieures 11, 12 des demi-arceaux 7, 8. Une tige filetée 16 coopère par vissage avec les organes de prise 14, 15, qui sont chacun munis à cet effet d'un corps fileté respectif 17 et 18 agencé en écrou. Les corps filetés 17, 18 sont placés à l'extrémité axialement distale de l'organe de prise 14, 15 auxquels ils sont affectés, pour optimiser la course de la tige filetée 16 compte tenu d'un éloignement donné des organes de prises 14, 15 l'un de l'autre. Un tel éloignement est susceptible d'être librement choisi sans affecter la liaison par emmanchement des demi-arceaux 7, 8 l'un à l'autre, ni sans induire un encombrement et une complexité de la structure du dispositif susceptibles de générer des coûts d'obtention et de montage rédhibitoires à la commercialisation du dispositif. La tige filetée 16 comporte à ses extrémités des filetages respectifs 19 et 20 à sens de rotation inverse, et dans sa zone médiane un organe de manoeuvre en rotation 21 agencé en écrou et rapporté sur la tige filetée 16 par soudage. On notera que l'agencement de l'organe de manoeuvre en rotation 21 indiffère, dès lors qu'il présente un élément apte à offrir pour l'opérateur une prise permettant sa manoeuvre en rotation. Cette indifférence de conformation de l'organe de manoeuvre 21 est notamment offerte en raison de l'éloignement radial de la tige filetée 16 par rapport aux extrémités supérieures 11, 12 des demi-arceaux 7, 8, et du large passage ménagé entre les organes de prise 14, 15 indépendamment rapportés sur l'extrémité supérieure 11, 12 du demi-arceau 7, 8 qui leur est affecté. L'accès à l'organe de manoeuvre 21 par un opérateur est offert transversalement aux axes d'extension A2 et A1 de la tige filetée 16 et des extrémités supérieures 11, 12 des demi-arceaux 7, 8, ce qui facilite sa préhension et sa manoeuvre en rotation par un opérateur.

Les corps filetés 17, 18 comportent des filetages intérieurs à sens de rotation inverse en correspondance avec les filetages 19, 20 que comporte la tige filetée 16. L'organe de manoeuvre 21 permet de saisir la tige filetée 16 pour sa mise en rotation et en conséquence pour provoquer un rapprochement ou inversement un éloignement des extrémités supérieures 11, 12 des demi-arceaux 7, 8.

Les organes de prise 14, 15 sont agencés en cavalier dont les pattes 24 sont scellées à la périphérie des extrémités supérieures 11, 12 des demi-arceaux 7, 8. Ces dispositions permettent de placer l'axe A1 de rotation de la tige filetée 16 à distance de l'axe A2 d'extension générale des extrémités 11, 12 des demi-arceaux 7, 8. Cette distance de séparation entre les axes A1 et A2 est apte à être librement et aisément choisie à partir d'un ajustement de la longueur des pattes 24 des cavalier constitutifs des organes de prise 14, 15. Les pattes 24 des cavaliers logent entre elles les corps filetés 17, 18 qui leur sont affectés. Ces corps filetés 17, 18 comprennent chacun un écrou 22, 23 qui est rapporté par soudage en appui axial contre des nervures latérales de renfort 25 ménagées contre la face interne des pattes 24 des cavaliers. Une platine 26 de jonction entre elles des pattes 24 que comporte chacun des cavaliers présente des débordements latéraux de renfort 27 qui s'étendent vers l'extérieur des pattes 24.

Les moyens de liaison du type par emmanchement comprennent un tube 28 qui est emboîté en coulissement glissant à l'intérieur de l'une et/ou de l'autre des extrémités supérieures 11, 12 des demi-arceaux 7, 8. Ces dispositions confèrent au tube 28 une aptitude à constituer un contrefort de la tige filetée 16, pour la préserver des efforts résultant de l'écartement des extrémités supérieures 11, 12 des demi-arceaux 7, 8, et en conséquence permettant de préserver les corps filetés 17, 18 recevant les extrémités 19, 20 de la tige filetée 16. L'ensemble du dispositif d'écartement est préservé à partir de la robustesse des moyens de liaison, et notamment du tube 28, afin d'offrir toutes les qualités requises de fiabilité et de pérennité. La liberté de coulissement du tube 28 à l'intérieur de l'une et/ou de l'autre des extrémités supérieures 11, 12 est susceptible d'être limitée, au moyen d'organes de butée portés par les arceaux 7, 8 par exemple, ou de manière analogue par scellement ou par brochage.

Enfin, il va de soi que la présente invention n'est pas limitée à l'exemple de réalisation préférentiel décrit, mais qu'elle peut être modifiée ou adaptée en fonction des besoins ou des exigences particulières, sans pour autant sortir du cadre de l'invention.

## Revendications

1. Dispositif d'écartement (13) entre les extrémités supérieures (11, 12) de demi-arceaux (7, 8) constitutifs d'une ossature (5) destinée à soutenir et à mettre sous tension une toile (6) d'un abri léger (1), ce dispositif (13) comprenant des moyens de liaison du type par emmanchement coulissant d'un tube (28) à l'intérieur de l'une au moins des extrémités supérieures (11, 12) des demi-arceaux (7, 8), et des moyens d'écartement des dites extrémités (11, 12) comprenant des organes de prise (14, 15) respectivement solidaires de l'une et l'autre des extrémités (11, 12) et un organe fileté (16) coopérant avec lesdits organes de prise (14, 15) en vue du rapprochement et/ou inversement de l'éloignement des dites extrémités (11, 12) l'une de l'autre, lesdits organes de prise (14, 15) étant solidarisés à l'extérieur desdites extrémités (11, 12), **caractérisé en ce que** l'organe fileté est constitué d'une tige filetée (16) munie dans sa zone médiane d'un organe de manoeuvre (21) en rotation et à ses extrémités de filetages (19, 20) à sens inverse de rotation, et **en ce que** les organes de prise (14, 15) comportent des filetages intérieurs d'un sens de rotation inverse de l'un à l'autre des organes de prise (14, 15), ces filetages intérieurs étant respectivement coopérants avec les filetages correspondants (19, 20) de la tige filetée (16).

2. Dispositif d'écartement selon la revendication 1, **caractérisé en ce que** les organes de prise (14, 15) sont agencés en cavalier dont les pattes (24) sont scellées à la périphérie des dites extrémités (11, 12) des demi-arceaux (7, 8) et logent entre elles un corps (17, 18) muni du filetage intérieur (22, 23) correspondant.

3. Dispositif d'écartement selon la revendication 2, **caractérisé en ce que** ledit corps (17, 18) comprend un écrou (22, 23) solidarisé aux pattes (24) du cavalier constitutif de l'organe de prise (14, 15) correspondant.

4. Dispositif d'écartement selon la revendication 3, **caractérisé en ce que** le corps (17, 18) comprend des nervures latérales de renfort (25) respectivement ménagées contre la face interne des pattes (24) du cavalier constitutif de l'organe de prise (14, 15) correspondant, l'écrou (22, 23) étant solidarisé aux pattes (24) par l'intermédiaire des nervures latérales de renfort (25) contre lesquelles il est placé en appui axial.

5. Dispositif d'écartement selon l'une quelconque des revendications 2 à 4, **caractérisé en ce que** les corps (17, 18) sont ménagés aux extrémités distales des organes de prise (14, 15).

6. Dispositif d'écartement selon l'une quelconque des revendications 2 à 5, **caractérisé en ce qu'**une platine de jonction (26) des pattes (24) du cavalier comporte des débordements latéraux de renfort (27).

7. Dispositif d'écartement selon l'une quelconque des revendications 2 à 6, **caractérisé en ce que** chaque cavalier est indifféremment formé par moulage ou par usinage d'un tronçon issu d'un profilé ou encore par assemblage par scellement d'éléments le composant.

8. Dispositif d'écartement selon l'une quelconque des revendications précédentes, **caractérisé en ce que** l'organe de manoeuvre (21) est agencé en organe de section polygonale.

9. Dispositif d'écartement selon l'une quelconque des revendications précédentes, **caractérisé en ce que** l'organe de manoeuvre (21) est solidarisé par scellement sur la tige filetée (16).

10. Dispositif d'écartement selon l'une quelconque des revendications précédentes, **caractérisé en ce que** les moyens de liaison comprennent le dit tube (28) constitué d'un élément indépendant qui est emmanché en coulissement glissant à l'intérieur de l'une et/ou l'autre des extrémités supérieures (11, 12) des demi-arceaux (7, 8), le tube (28) constituant un contrefort de la tige filetée (16) à l'encontre des efforts que supporte cette dernière lors de l'écartement l'une de l'autre des extrémités supérieures (11, 12) des demi-arceaux (7, 8).

## Patentansprüche

1. Vorrichtung zum Spreizen (13) zwischen den oberen Enden (11, 12) von halbbogenförmigen Stücken (7, 8), die ein Skelett (5) bilden, das dazu bestimmt ist, eine Plane (6) eines leichten Unterstands (1) zu stützen und unter Spannung zu setzen, wobei diese Vorrichtung (13) Verbindungseinrichtungen vom Typ einer gleitend verschieblichen Einsteckverbindung eines Rohrs (28) im Inneren von zumindest einem der oberen Enden (11, 12) der halbbogenförmigen Stücke (7, 8) und Einrichtungen zum Spreizen der Enden (11, 12) aufweist, die Halteeinrichtungen (14, 15), welche mit dem einen bzw. dem anderen der Enden (11, 12) fest verbunden sind, und eine mit Gewinde versehene Einrichtung (16) aufweisen, welche mit den Halteeinrichtungen (14, 15) im Hinblick auf ein aneinander Annähern und/oder umgekehrt ein voneinander Entfernen der Enden (11, 12) zusammenarbeiten, wobei die Halteeinrichtungen (14, 15) an der Außenseite der Enden (11, 12) fest angebracht sind, **dadurch gekennzeichnet, dass** die mit Gewinde versehene Einrichtung aus einer Gewindestange (16) besteht, die in ihrer mittleren Zone mit einer Drehbetätigungseinrichtung (21) und an ihren Enden mit Gewinden (19, 20) von umgekehrter Drehrichtung versehen ist, und dadurch, dass die Halteeinrichtungen (14, 15) Innengewinde aufweisen, deren Drehsinn von dem einen zum anderen der Halteeinrichtungen (14, 15) umgekehrt ist, wobei diese Innengewinde jeweils mit den entsprechenden Gewinden (19, 20) der Gewindestange (16) zusammenarbeiten.

2. Vorrichtung zum Spreizen nach Anspruch 1, **dadurch gekennzeichnet, dass** die Halteeinrichtungen (14, 15) rittlings angeordnet sind, wobei deren Laschen (24) mit dem Umfang der Enden (11, 12) der halbkreisförmigen Stücke (7, 8) fest verbunden sind und sie zwischen sich einen Körper (17, 18) unterbringen, der mit einem entsprechenden Innengewinde (22, 23) versehen ist.

3. Vorrichtung zum Spreizen nach Anspruch 2, **dadurch gekennzeichnet, dass** der Körper (17, 18) eine Mutter (22, 23) aufweist, die mit den Laschen (24) des Reiterelementes, das die entsprechende Halteeinrichtung (14, 15) bildet, fest verbunden ist.

4. Vorrichtung zum Abspreizen nach Anspruch 3, **dadurch gekennzeichnet, dass** der Körper (17, 18) seitliche Verstärkungsrippen (25) aufweist, die jeweils an der Innenfläche der Laschen (24) des Reiterelementes vorgesehen sind, welches die entsprechende Halteeinrichtung (14, 15) bildet, wobei die Mutter (22, 23) mit den Laschen (24) über die seitlichen Verstärkungsrippen (25) fest verbunden ist, gegen die sie in axialer Anlage ansteht.

5. Vorrichtung zum Spreizen nach einem der Ansprüche 2 bis 4, **dadurch gekennzeichnet, dass** die Körper (17, 18) an den distalen Enden der Halteeinrichtungen (14, 15) vorgesehen sind.

6. Vorrichtung zum Spreizen nach einem der Ansprüche 2 bis 5, **dadurch gekennzeichnet, dass** eine Platte zum Verbinden (26) der Laschen (24) des Reiterstücks seitliche verstärkende Überstandstücke (27) aufweist.

7. Vorrichtung zum Spreizen nach einem der Ansprüche 2 bis 6, **dadurch gekennzeichnet, dass** jedes Reiterstück unterschiedslos durch Gießen oder durch spanende Bearbeitung eines von einem Profilmaterial stammenden Abschnittes oder auch durch Montieren mittels festen Verbindens von dieses bildenden Elementen hergestellt ist.

8. Vorrichtung zum Spreizen nach einem der vorhergehenden Ansprüche, **dadurch gekennzeichnet, dass** die Betätigungseinrichtung (21) als eine Einrichtung mit Vieleck-Querschnitt ausgebildet ist.

9. Vorrichtung zum Spreizen nach einem der vorhergehenden Ansprüche, **dadurch gekennzeichnet, dass** die Betätigungseinrichtung (21) auf der Gewindestange (16) durch festes Verankern angebracht ist.

10. Vorrichtung zum Spreizen nach einem der vorhergehenden Ansprüche, **dadurch gekennzeichnet, dass** die Verbindungseinrichtungen das Rohr (28) aufweisen, das aus einem unabhängigen Element besteht, welches gleitend verschieblich in das Innere des einen und/oder des anderen der oberen Enden (11, 12) der halbbogenförmigen Stücke (7, 8) eingesetzt ist, wobei das Rohr (28) eine Abstützung der Gewindestange (16) gegenüber der Kräfte bildet, die Letztere beim voneinander weg Bewegen des einen von dem anderen der oberen Enden (11, 12) der halbbogenförmigen Stücke (7, 8) stützt.

## Claims

1. Device for spreading (13) between the upper ends (11, 12) of semi-arches (7, 8) comprising a framework (5) intended to support and apply tension to a canvas (6) of a light shelter (1), this device (13) comprising means for connecting of the sliding press-fitting type of a tube (28) to the inside of at least one of the upper ends (11, 12) of the semi-arches (7, 8), and means for spreading said ends (11, 12) comprising gripping members (14, 15) respectively attached to each other of the ends (11, 12) and a threaded member (16) cooperating with said gripping members (14, 15) for the purpose of bringing them closer and/or inversely for separating said ends (11, 12) from one another, said gripping members (14, 15) being attached to the exterior of said ends (11, 12), **characterised in that** the threaded member is comprised of a threaded rod (16) provided in its median zone with a rotational operating member (21) and at its ends with threads (19, 20) in the opposite direction of rotation, and **in that** the gripping members (14, 15) comprise internal threads in a direction of rotation opposite each other of the gripping members (14, 15), with these internal threads cooperating respectively with the corresponding threads (19, 20) of the threaded rod (16).

2. Device for spreading according to claim 1, **characterised in that** the gripping members (14, 15) are arranged on a slide of which the brackets (24) are sealed to the periphery of said ends (11, 12) of the semi-arches (7, 8) and house between them a body (17, 18) provided with the corresponding internal threads (22, 23).

3. Device for spreading according to claim 2, **characterised in that** said body (17, 18) comprises a nut (22, 23) attached to the brackets (24) of the slide comprising the corresponding gripping member (14, 15).

4. Device for spreading according to claim 3, **characterised in that** the body (17, 18) comprises lateral reinforcing ribs (25) respectively arranged against the internal face of the brackets (24) of the slide comprising the corresponding gripping member (14, 15), with the nut (22, 23) being attached to the brackets (24) by the intermediary of lateral reinforcing ribs (25) against which it is placed in an axial bearing.

5. Device for spreading according to any of claims 2 to 4, **characterised in that** the bodies (17, 18) are arranged at the distal ends of the gripping members (14, 15).

6. Device for spreading according to any of claims 2 to 5, **characterised in that** a junction plate (26) of the brackets (24) of the slide comprises reinforcing lateral overflows (27).

7. Device for spreading according to any of claims 2 to 6, **characterised in that** each slide is indifferently formed by moulding or by machining a section from a profile or by assembling by sealing elements that comprise it.

8. Device for spreading as claimed in any preceding claim, **characterised in that** the operating member (21) is arranged as a member with a polygonal section.

9. Device for spreading as claimed in any preceding claim, **characterised in that** the operating member (21) is attached by sealing to the threaded rod (16).

10. Device for spreading as claimed in any preceding claim, **characterised in that** the means for connecting comprise said tube (28) comprised of an independent element which is slidingly press-fitting to the inside of one and/or the other of the upper ends (11, 12) of the semi-arches (7, 8), with the tube (28) comprising a buttress of the threaded rod (16) against the efforts that the latter supports during the spreading from one another of the upper ends (11, 12) of the semi-arches (7, 8).
